# EUROPÄISCHE PATENTSCHRIFT

(11) **EP 3 494 266 B1**
(45) Veröffentlichungstag und Bekanntmachung des Hinweises auf die Patenterteilung: **20.01.2021**
(21) Anmeldenummer: 17740617.0
(22) Anmeldetag: 29.06.2017
(51) Int. Cl.: F16B 11/00, F16B 25/00, F16B 1/00, E04F 13/08, F16B 5/07

(54) **BEFESTIGUNGSEINRICHTUNG**
FASTENING DEVICE
DISPOSITIF DE FIXATION

(30) Priorität: 06.08.2016 DE 102016009614
(43) Veröffentlichungstag der Anmeldung: 12.06.2019
(73) Patentinhaber: Gottlieb Binder GmbH & Co. KG, 71088 Holzgerlingen (DE)
(72) Erfinder: KRIPPENDORF, Jörg Siegfried, 57399 Kirchhundem (DE)
(74) Vertreter: Bartels und Partner, Patentanwälte
(86) Internationale Anmeldenummer: PCT/EP2017/000781
(87) Internationale Veröffentlichungsnummer: WO 2018/028809

(56) Entgegenhaltungen:
- EP-A1- 2 071 200
- EP-A1- 2 365 156
- WO-A1-97/06029
- WO-A1-2013/178339
- DE-A1-102013 009 091

## Beschreibung

Die Erfindung betrifft eine Befestigungseinrichtung, insbesondere als Teil eines Befestigungssystems zum wiederlösbaren Festlegen von Bauteilen aneinander, wie von Wandabdeckungen an Decken und Wänden, vorzugsweise im Bereich von Innenräumen jedweder Art, mit den Merkmalen im Oberbegriff von Anspruch 1.

Befestigungseinrichtungen, die es als Bestandteile von Befestigungssystemen ermöglichen, durch Bildung von Haftverbindungen Gegenstände oder Bauteile an Drittbauteilen festzulegen, sind in verschiedenen Ausgestaltungen Stand der Technik. Beispielsweise offenbart das Dokument DE 10 2015 001 335 A1 eine Befestigungseinrichtung der eingangs genannten Gattung, die einsetzbar ist, um an Decken oder an Wänden von Gebäuden flächige Bauteile durch Bilden von Haftverbindungen anzubringen. Dabei kann es sich um Panele als Decken- oder Wandverkleidungen handeln, beispielsweise um unschön aussehende Stellen zu kaschieren oder auch eine Wärme- und/oder Schallisolation zu bilden. Derartige Befestigungseinrichtungen sind auch einsetzbar, um an Teilen von Kraftfahrzeugen, Eisenbahnen, Schiffen oder von Flugzeugen Drittbauteile festzulegen, um beispielsweise an Karosserieteilen Blenden oder Verkleidungen anzubringen. Gegenüber der Festlegung der Bauteile mittels formschlüssig eingreifender Verankerungsmittel hat die Bildung von Haftverbindungen den Vorteil, dass die Demontage zerstörungsfrei erfolgen kann, beispielsweise zum Austausch von Bauteilen oder zu deren Abnahme für Wartungsarbeiten. Bei der Festlegung mittels Haftverbindungen lassen sich auch Positionskorrekturen beim Festlegevorgang leicht durchführen.

Die in der genannten DE 10 2015 001 335 A1 offenbarte Befestigungseinrichtung weist ein Trägerteil und auf einer Trägerplatte des Trägerteils angebrachte, davon vorstehende Haftverschlusselemente auf, mit einem über die Trägerplatte vorstehenden Stielteil und mit mindestens einem elastisch rückfedernden Verhakungsteil. Das jeweilige Verhakungsteil erstreckt sich in einer Ausgangsstellung von dem Stielteil und/oder einem Aufnahmeteil für das jeweilige Verhakungsteil unter Bildung eines Zwischenraums nach außen weg, der sich verringert, sobald unter dem Einfluss einer äußeren Krafteinwirkung das jeweilige Verhakungsteil sich auf das Stiel- oder Aufnahmeteil zubewegt.

Das jeweilige Trägerteil ist in seinem Ausgangszustand mit seinem Verhakungsteil in eine Profilöffnung eines Profilkanals zumindest bis zum Erreichen einer Endlage einführbar, und durch Drehen der außerhalb der Profilöffnung liegenden Trägerplatte ist das jeweilige in seiner Endlage befindliche Verhakungsteil in Untergriff mit mindestens einer zuordenbaren, nutartig sich verbreiternden Anlagefläche der Profilöffnung in dem Profilkanal festsetzbar. Des Weiteren ist das jeweilige Trägerteil mit seinen vorstehenden Haftverschlusselementen unter Bildung eines wiederlösbaren Haftverschlusses mit korrespondierend ausgebildeten Haftverschlusselementen eines betreffenden Drittbauteils in Eingriff bringbar.

Die WO 2013/178339 A1 beschreibt eine Befestigungseinrichtung mit den Merkmalen im Oberbegriff von Anspruch 1, insbesondere als Teil eines Befestigungssystems zum wiederlösbaren Festlegen von Bauteilen aneinander, wie von Wandabdeckungen an Decken und Wänden, vorzugsweise im Bereich von Innenräumen jedweder Art, mit einem Trägerteil, das auf seiner einen Seite eine Trägerplatte für vorstehende Haftverschlusselemente und das auf seiner gegenüberliegenden anderen Seite ein vorstehendes Festlegeteil aufweist, das zumindest ein Festlegemittel aufweist, wobei das Festlegeteil eine axiale Baulänge hat, die vorzugsweise kleiner oder gleich ist als jede quer dazu verlaufende radiale Baulänge des Trägerteils.

Weitere Befestigungseinrichtungen gehen aus der DE 10 2013 009 091 A1, der EP 2 071 200 A1, der EP 2 365 156 A1 und der WO 97/06029 A1 hervor.

Ausgehend von diesem Stand der Technik stellt sich die Erfindung die Aufgabe, eine verbesserte Befestigungseinrichtung der eingangs genannten Art zur Verfügung zu stellen, die kostengünstig herstellbar und mit geringem Montageaufwand universell einsetzbar ist.

Erfindungsgemäß ist diese Aufgabe durch eine Befestigungseinrichtung gelöst, die die Merkmale des Patentanspruchs 1 in seiner Gesamtheit aufweist. Gemäß dem kennzeichnenden Teil des Patentanspruchs 1 zeichnet sich die Erfindung dadurch aus, dass die Trägerplatte eine Ausnehmung für den Eingriff eines Betätigungswerkzeugs aufweist, die ausgehend von der Trägerplatte in das Festlegeteil hineinreicht und die von den Haftverschlusselementen freigelassen ist. Bei der vorgesehenen Bauweise des Festlegeteils mit einem Festlegemittel, das ohne federnd bewegbare Verhakungsmittel selbstrastend oder selbstschneidend ist, ist die erfindungsgemäße Befestigungseinrichtung rationell und besonders kostengünstig herstellbar. Am bauseitigen Untergrund sind keine besonderen Ausgestaltungen für die Aufnahme des Festlegeteils und die Zusammenwirkung mit dem daran befindlichen Festlegemittel erforderlich. Anstelle eines bei der erwähnten, bekannten Lösung vorgesehenen Profilkanals genügt eine vorgebohrte Aufnahme für das jeweilige Festlegeteil. Die erfindungsgemäße Befestigungseinrichtung lässt sich daher mit geringem Montageaufwand universell einsetzen, da keine besonderen Anforderungen an den jeweiligen Baugrund, wie die Möglichkeit der Ausbildung eines Profilkanals, zu stellen sind. Mittels der für den Angriff eines Betätigungswerkzeugs vorgesehenen Ausnehmung, die von der Trägerplatte ausgeht und dadurch an der beim Montagevorgang vorderen Seite frei zugänglich ist, gestaltet sich der Montagevorgang besonders einfach und bequem.

Mit besonderem Vorteil kann das Trägerteil mit dem Festlegeteil und dem jeweiligen Festlegemittel einstückig aus einem Kunststoff-Spritzgussteil, vorzugsweise aus glasfaserverstärktem Polyamid, wie beispielsweise PA6, gebildet sein.

Die für die Bildung der Haftverbindung vorgesehenen Haftverschlusselemente können ganz oder teilweise aus Schlingen, Schlaufen, Haken, Pilzen oder Stielen mit end- oder kopfseitig angeordneten Verdickungen gebildet sein. Für die Ausbildung eines Pilz-in-Pilz-Verschlusses können mit besonderem Vorteil die bekannten Duotec®-Haftverschlusselemente eingesetzt werden.

Als selbstschneidendes Bauelement kann das jeweilige Festlegemittel aus mindestens einem Gewindegang gebildet sein, der um das zapfenartig ausgebildete Festlegeteil herumgeführt ist und der sich vorzugsweise von der Trägerplatte ausgehend bis zum freien Ende oder einem freien Endbereich des Festlegeteils erstreckt. Bei dieser Ausbildung des Festlegemittels als selbstschneidende Schraube ist der Montagevorgang besonders einfach und bequem mittels eines Drehwerkzeugs durchführbar, das in die in der Trägerplatte hierfür vorgesehene Ausnehmung eingreift.

Bei besonders vorteilhaften Ausführungsbeispielen ist die Anordnung derart getroffen, dass der jeweilige Gewindegang in Längsrichtung des zapfenartigen Festlegeteils gesehen unter Bildung mindestens einer Aufnahmenut unterbrochen ist, vorzugsweise eine Gruppe von mehreren Aufnahmenuten vorhanden ist, die in Übereinanderanordnung einen Längskanal parallel zur Längsrichtung des Festlegeteils ausbilden, und weiter bevorzugt mindestens zwei solcher Längskanäle vorhanden sind, die besonders bevorzugt diametral zur Längsachse des Festlegeteils gegenüberliegend angeordnet sind und ausschließlich den jeweiligen Gewindegang durchgreifen.

Bei aus Kunststoff bestehendem Trägerteil mit einem durch eine selbstschneidende Schraube gebildeten Festlegemittel können bei zwei einander gegenüberliegenden Längskanälen, in Umfangsrichtung gesehen, die jeweils einen Enden der Gewindegänge eine auf einer gemeinsamen radialen Mitten-Querachse des Trägerteils liegende Seitenwand des betreffenden Längskanals definieren und die jeweils anderen Enden der Gewindegänge, die auf unterschiedlichen, aus der Mitte versetzten radialen Querachsen liegen, können die andere Seitenwand des jeweiligen Längskanals definieren, die einen die Weite des Längskanals nach außen erweiternden Verlauf besitzt. Diese Geometrie ermöglicht eine Relaxation in radialer Spannungsrichtung zum Zentrum des mehrgängigen Gewindeprofils hin. In der bei selbstschneidenden Schrauben bekannten Weise bildet diese Relaxation eine Gewindesicherung gegen Lösen.

Für den Erhalt mindestens eines selbstrastenden Festlegemittels am Festlegeteil können zumindest die Flanken des jeweiligen Gewindegangs derart elastisch ausgebildet sein, dass sich die Befestigungseinrichtung als Ganzes in der Art eines eindrückbaren Stöpsels in das zuordenbare Bauteil in verrastender Weise einsetzen lässt.

Die in der Trägerplatte vorgesehene Werkzeug-Ausnehmung kann einen drehenden und/oder drückenden Angriff des Betätigungswerkzeugs ermöglichen, wobei die Ausnehmung für ein Drehwerkzeug vorzugsweise als Innensechskant-Ausnehmung ausgebildet ist.

Bei vorteilhaften Ausführungsbeispielen ist das Trägerteil als mehreckige, vorzugsweise sechs- oder achteckige Trägerplatte ausgebildet, auf der auf einer Seite sich die Haftverschlusselemente als Baueinheit zusammengefasst festlegen, insbesondere aufkleben lassen. Bei Haftverschlusselementen mit einem aus schweißbarem Kunststoffmaterial bestehenden Träger der Haftelemente kann die Verbindung mit der Trägerplatte auch durch Schweißen gebildet sein.

Gemäß dem Patentanspruch 10 ist Gegenstand der Erfindung auch ein Befestigungssystem, das aus mindestens einer Befestigungseinrichtung nach einem der Ansprüche 1 bis 9 und mindestens einer weiteren Befestigungseinrichtung besteht, die Haftverschlusselemente aufweist, die mit den Haftverschlusselementen der einen Befestigungseinrichtung einen wiederlösbaren Haftverschluss bilden und die mit einem weiteren Bauteil verbindbar sind, das von dem Bauteil mit der einen Befestigungseinrichtung verschieden ist.

Nachstehend ist die Erfindung anhand eines in der Zeichnung dargestellten Ausführungsbeispiels im Einzelnen erläutert. Es zeigen:
- Fig. 1: eine perspektivische Schrägansicht eines Ausführungsbeispiels der erfindungsgemäßen Befestigungseinrichtung, gesehen auf die mit einem Haftverschlusselement versehene Vorderseite;
- Fig. 2: eine perspektivische Schrägansicht des Ausführungsbeispiels, gesehen auf die ein Festlegeteil aufweisende Rückseite;
- Fig. 3: eine Draufsicht der Rückseite des Ausführungsbeispiels;
- Fig. 4: eine Schnittdarstellung des Ausführungsbeispiels entsprechend der Schnittlinie IV-IV von Fig. 3, wobei an der Vorderseite die Haftverschlusselemente weggelassen sind;
- Fig. 5: einen Abschnitt eines bauseitigen Untergrunds, an dem das Ausführungsbeispiel der erfindungsgemäßen Befestigungseinrichtung angebracht ist;
- Fig. 6: einen Abschnitt eines Drittbauteils, an dem für dessen Festlegung am bauseitigen Untergrund von Fig. 5 eine weitere Befestigungseinrichtung gemäß dem Ausführungsbeispiel der Erfindung angebracht ist; und
- Fig. 7: einen Längenabschnitt des Befestigungssystems mit mittels der erfindungsgemäßen Befestigungseinrichtungen aneinander festgelegtem bauseitigen Untergrund und Drittbauteil.

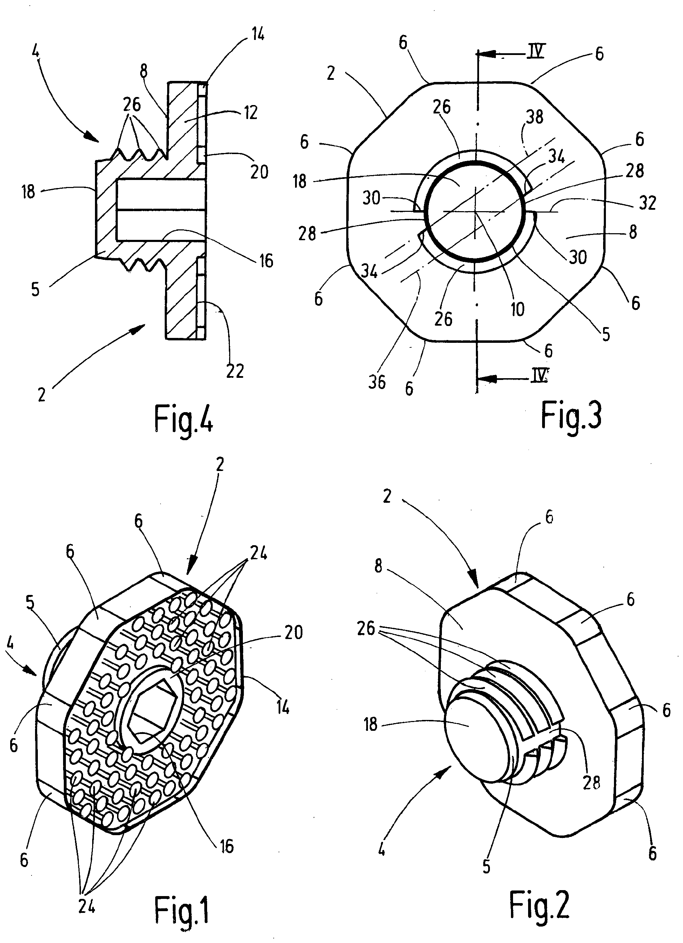

Die Fig. 1 bis 4 zeigen das Ausführungsbeispiel der erfindungsgemäßen Befestigungseinrichtung in gegenüber einer praktischen Ausführungsform in jeweils etwa 2½-fach vergrößerter Darstellung. Das Ausführungsbeispiel besteht aus einem einstückigen Baukörper mit einem Trägerteil 2 und einem an dessen Rückseite befindlichen Festlegeteil 4, der durch Spritzgießen aus Kunststoff, beim Ausführungsbeispiel aus einem glasfaserverstärkten Polyamid, wie beispielsweise PA6, hergestellt ist. Weitere bevorzugte Werkstoffe sind:
- Hochwertiges glasgefülltes Polyamid 66 (PA GF)
- Polyphtalamid glasgefüllt (PPA GF)
- Polyetherimid glasgefüllt (PEI GF)
- Polyphenylensulfid glasgefüllt (PPS GF)
- Polyetheretherketon glasgefüllt (PEEK GF)

Das Trägerteil 2 hat, wie den Fig. 1 bis 3 zu entnehmen ist, einen Umriss in Form eines Oktaeders mit gerundeten Eckbereichen 6. An der ebenflächigen Rückseite 8 des Trägerteils 2 ist das Festlegeteil 4 koaxial zum Zentrum 10 (Fig. 3) in Form eines vorstehenden runden Zapfens 5 angeformt. Wie Fig. 4 zeigt, beträgt die axiale Länge des vorstehenden Zapfens 5 weniger als 1/3 der radial gemessene Breite des Trägerteils 2. An der gegenüberliegenden Vorderseite bildet das Trägerteil 2 eine ebenflächige Trägerplatte 12, die entlang des Außenumfangs von einer aus der Ebene der Trägerplatte 12 vorstehenden Randrippe 14 eingefasst ist. Die Höhe der Randrippe 14 beträgt etwa ein Viertel der Dicke der Trägerplatte 12.

Wie die Fig. 1 und 4 zeigen, erstreckt sich, von der Vorderseite der Trägerplatte 12 ausgehend, eine Ausnehmung 16 in den Zapfen 5 des Festlegeteils 4. Die Ausnehmung 16 ist mit einer Endwand 18 kurz vor dem freien Ende des Zapfens 5 geschlossen. Als Aufnahme für den Eingriff eines Drehwerkzeugs hat die Ausnehmung 16 die Form eines Innensechskants, bei der genannten Größe einer praktischen Ausführungsform für eine Schlüsselweite von 6 mm. Wie die Fig. 1 und 4 zeigen, ist der Eingang der Ausnehmung 16 von einer Einfassung in Form einer Ringrippe 20 mit kreisrundem Außenumfang umgeben, wobei die Höhe der aus der Ebene der Trägerplatte 12 vorstehenden Ringrippe 20 der Höhe der umfänglichen Randrippe 14 entspricht. Die zwischen äußerer Randrippe 14 und innerer Ringrippe 20 befindliche Ringfläche 22 (Fig. 4) bildet die Anlagefläche für die Anlage eines die Ringfläche 22 passend ausfüllenden Zuschnitts mit vorstehenden Haftverschlusselementen 24 (in Fig. 1 nur teilweise beziffert). Beim vorliegenden Beispiel sind die Haftverschlusselemente 24 für die Bildung eines Pilz-in-Pilz-Verschlusses durch Pilzköpfe auf von einem Träger vorstehenden Stielen gebildet. Hierfür kann ein Zuschnitt des bekannten Duotec®-Materials vorgesehen sein, das als Zuschnitt selbstklebend auf der Ringfläche 22 der Trägerplatte 12 befestigt ist. Es versteht sich, dass andersartige Verschlusselemente vorgesehen sein können, beispielsweise mit Verhakungselementen in Form von Schlingen, Schlaufen oder Haken. Anstelle einer Klebeverbindung mit der Trägerplatte 12 kann auch eine Schweißverbindung vorgesehen sein.

Beim vorliegenden Ausführungsbeispiel ist der das Festlegeteil bildende Zapfen 5 als selbstschneidende Schraube ausgebildet, deren Gewindegänge 26, von denen in Fig. 2 und 4 drei Gewindegänge 26 sichtbar sind, das Festlegemittel bilden. Auf zwei zueinander gegenüberliegenden Seiten sind die Gewindegänge 26 derart unterbrochen, dass jeweils ein axial verlaufender Längskanal 28 gebildet ist, s. insbesondere Fig. 2 und 3. Wie die letztgenannte Figur zeigt, definiert jeweils ein Ende 30 der Gewindegänge 26 eine auf einer gemeinsamen radialen Mitten-Querachse 32 des Trägerteils 4 liegende Seitenwand des betreffenden Längskanals 28, wobei die jeweils anderen Enden 34 der Gewindegänge 26, die auf unterschiedlichen, aus der Mitte versetzten radialen Querachsen 36 und 38 liegen, die andere Seitenwand des Längskanals 28 definieren, die einen die Weite des Längskanals 28 nach außen erweiternden Verlauf besitzt. In der bei selbstschneidenden Kunststoffschrauben bekannten Weise ermöglicht diese Geometrie eine Relaxation in radialer Spannungsrichtung zum Zentrum um das Schraubenprofil, was das Lösen der Verschraubung bei dynamischer Schraubenlast verhindert.

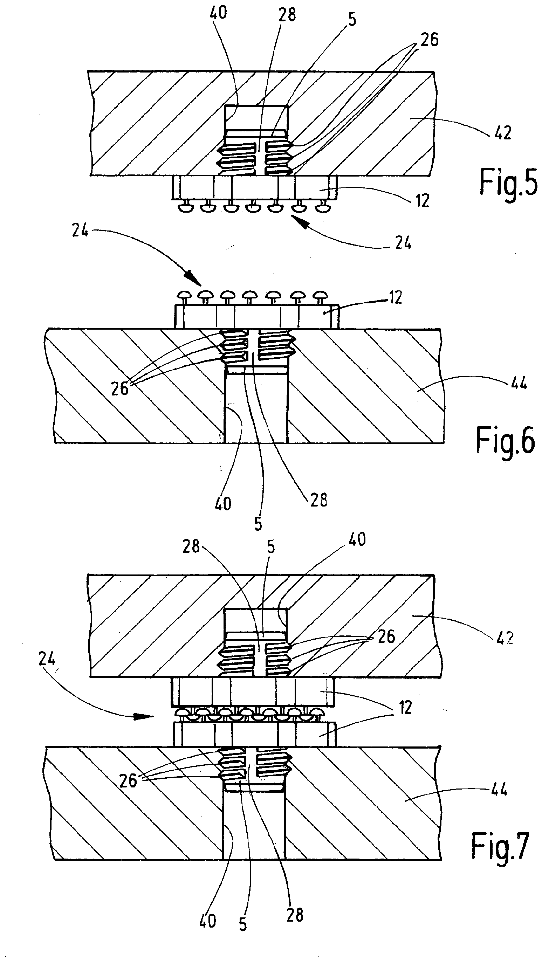

Anstelle der Gewindegänge 26 mit Gewindesteigung, die durch Drehen des Trägerteils 2 selbstschneidend eine Schraubverbindung in einer vorgebohrten Aufnahme 40, s. Fig. 5 bis 7, bilden, kann das Festlegemittel an der Außenseite des Zapfens 5 des Festlegeteils 4 selbstrastend ausgebildet sein. Hierfür können Gewindegänge 26 mit oder ohne Gewindesteigung an ihren Flanken elastisch nachgiebig ausgebildet sein, so dass die Verankerung durch Eindrücken ohne Drehbewegung in die Aufnahme 40 am Bauteil oder tragenden Untergrund zustande kommt.

Die Fig. 5 bis 7 zeigen in stark schematisch vereinfachter Form das Beispiel eines mit den erfindungsgemäßen Befestigungseinrichtungen gebildeten Befestigungssystems. In Fig. 5 und 7 ist ein durch einen gebäudeseitigen Untergrund gebildetes Bauteil mit 42 bezeichnet, in dem für jeweilige erfindungsgemäße Befestigungseinrichtungen vorgebohrte Aufnahmen 40 in Form eines Sackloches gebildet sind, von denen lediglich eines dargestellt ist. Ein am Bauteil 42 anzubringendes Drittbauteil, beispielsweise in Form eines Panels, ist in Fig. 6 und 7 mit 44 bezeichnet. Dieses weist für jeweilige erfindungsgemäße Befestigungseinrichtungen vorgebohrte Aufnahmen 40 in Form von Durchgangslöchern auf, von denen ebenfalls lediglich eines gezeigt ist. Während Fig. 5 und 6 das Bauteil 42 und das Drittbauteil 44 in nicht angebrachter Position zeigen, verdeutlicht Fig. 7 den Festlegezustand mit selbstschneidend gebildetem Gewindeeingriff des Zapfens 5 der jeweiligen Befestigungseinrichtung mit der zugeordneten Aufnahme 40 im Bauteil 42 und im Drittbauteil 44.

Die anspruchsgemäße Befestigungseinrichtung lässt sich auch einstückig, also zusammen mit den Haftverschlusselementen, über ein 3D-Druckverfahren in üblicher Weise herstellen. Dergestalt lässt sich das Herstellverfahren für die erfindungsgemäße Befestigungseinrichtung noch weiter automatisieren.

## Patentansprüche

1. Befestigungseinrichtung, insbesondere als Teil eines Befestigungssystems zum wiederlösbaren Festlegen von Bauteilen (42, 44) aneinander, wie von Wandabdeckungen an Decken und Wänden, vorzugsweise im Bereich von Innenräumen jedweder Art, mit einem Trägerteil (2), das auf seiner einen Seite eine Trägerplatte (12) für vorstehende Haftverschlusselemente (24) und das auf seiner gegenüberliegenden anderen Seite (8) ein vorstehendes Festlegeteil (4) aufweist, das zumindest ein Festlegemittel (26) aufweist, wobei das Festlegeteil (4) eine axiale Baulänge hat, die vorzugsweise kleiner oder gleich ist als jede quer dazu verlaufende radiale Baulänge des Trägerteils (2), und wobei das jeweilige Festlegemittel (26) des Festlegeteils (4) selbstrastend oder -schneidend ausgebildet ist;
**dadurch gekennzeichnet, dass** die Trägerplatte (12) eine Ausnehmung (36) für den Angriff eines Betätigungswerkzeuges aufweist, die ausgehend von der Trägerplatte (12) in das Festlegeteil (4) hineinreicht und die von den Haftverschlusselementen (24) freigelassen ist.

2. Befestigungseinrichtung nach Anspruch 1, **dadurch gekennzeichnet, dass** das Trägerteil (2) mit dem Festlegeteil (4) und dem jeweiligen Festlegemittel (26) einstückig aus einem Kunststoffspritzgussteil gebildet sind.

3. Befestigungseinrichtung nach Anspruch 1 oder 2, **dadurch gekennzeichnet, dass** die Haftverschlusselemente (24) ganz oder teilweise aus Schlingen, Schlaufen, Haken, Pilzen oder Stielen mit end- oder kopfseitig angeordneten Verdickungen gebildet sind.

4. Befestigungseinrichtung nach einem der vorstehenden Ansprüche, **dadurch gekennzeichnet, dass** das jeweilige Festlegemittel aus mindestens einem Gewindegang (26) gebildet ist, der um das zapfenartig ausgebildete Festlegeteil (4) herumgeführt ist und der sich vorzugsweise von der Rückseite (8) der Trägerplatte (12) ausgehend bis zum freien Ende oder einem freien Endbereich (18) des Festlegeteils (4) erstreckt.

5. Befestigungseinrichtung nach einem der vorstehenden Ansprüche, **dadurch gekennzeichnet, dass**
- der jeweilige Gewindegang (26) in Längsrichtung des zapfartigen Festlegeteils (4) gesehen unter Bildung mindestens einer Aufnahmenut (30, 34) unterbrochen ist;
- vorzugsweise eine Gruppe von mehreren Aufnahmenuten (30, 34) vorhanden ist, die in Übereinanderanordnung einen Längskanal (28) parallel zur Längsrichtung des Festlegeteils (4) ausbilden; und
- weiter bevorzugt mindestens zwei solcher Längskanäle (28) vorhanden sind, die besonders bevorzugt diametral zur Längsachse des Festlegeteils (4) gegenüberliegend angeordnet sind und ausschließlich den jeweiligen Gewindegang (26) durchgreifen.

6. Befestigungseinrichtung nach Anspruch 5, **dadurch gekennzeichnet, dass** bei zwei einander gegenüberliegenden Längskanälen (28), in Umfangsrichtung gesehen, die jeweils einen Enden (30) der Gewindegänge (26) eine auf einer gemeinsamen radialen Mitten-Querachse (32) des Trägerteils (2) liegende Seitenwand des betreffenden Längskanals (28) definieren und dass die jeweils anderen Enden (34) der Gewindegänge (26), die auf unterschiedlichen, aus der Mitte (10) versetzten radialen Querachsen (36, 38) liegen, die andere Seitenwand der Längskanäle (28) definieren, die einen die Weite des jeweiligen Längskanals (28) nach außen hin erweiternden Verlauf besitzt.

7. Befestigungseinrichtung nach Anspruch 5 oder 6, **dadurch gekennzeichnet, dass** für den Erhalt mindestens eines selbstrastenden Festlegemittels zumindest die Flanken des jeweiligen Gewindegangs (26) derart elastisch ausgebildet sind, dass sich die Befestigungseinrichtung als Ganzes in der Art eines eindrückbaren Stöpsels in das zuordenbare Bauteil (42, 44) in verrastender Weise einsetzen lässt.

8. Befestigungseinrichtung nach einem der vorstehenden Ansprüche, **dadurch gekennzeichnet, dass** die Werkzeug-Ausnehmung (36) einen drehenden und/oder drückenden Angriff des Betätigungswerkzeuges ermöglicht und vorzugsweise als Innensechskant-Ausnehmung ausgebildet ist.

9. Befestigungseinrichtung nach einem der vorstehenden Ansprüche, **dadurch gekennzeichnet, dass** das Trägerteil (2) als mehreckige, vorzugsweise sechs- oder achteckige Trägerplatte (12) ausgebildet ist, auf der auf einer Seite sich die Haftverschlusselemente (24) als Baueinheit zusammengefasst festlegen, insbesondere aufkleben, lassen.

10. Befestigungssystem bestehend aus mindestens einer Befestigungseinrichtung nach einem der vorstehenden Ansprüche und mindestens einer weiteren Befestigungseinrichtung, die Haftverschlusselemente (24) aufweist, die mit den Haftverschlusselementen (24) der einen Befestigungseinrichtung einen wieder lösbaren Haftverschluss bilden und die mit einem weiteren Bauteil (44) verbindbar sind, das von dem Bauteil (42) mit der einen Befestigungseinrichtung verschieden ist.

## Claims

1. Fastening device, in particular as part of a fastening system for detachably fixing components (42, 44) to one another, such as wall coverings to ceilings and walls, preferably in the field of interior spaces of any kind, with a support part (2) comprising a support plate (12) for protruding closure elements (24) on one side thereof and a protruding fixing part (4) with at least one fixing means (26) on the other, opposite side thereof, the fixing part (4) having an axial structural length preferably less than or equal to each radial structural length of the support part (2) extending transversely thereto, and the respective fixing means (26) of the fixing part (4) being designed to be self-locking or self-tapping; **characterised in that** the support plate (12) has a recess (36) for applying an actuating tool, said recess extending from the support plate (12) into the fixing part (4) and being left free of the closure elements (24).

2. Fastening device according to claim 1, **characterised in that** the support part (2) with the fixing part (4) and the respective fixing means (26) are formed in one piece from a plastic injection-moulded part.

3. Fastening device according to either claim 1 or claim 2, **characterised in that** the closure elements (24) may be formed either in full or in part from slings, loops, hooks, mushrooms or stems with thickenings arranged at the end or top sides thereof.

4. Fastening device according to any one of the preceding claims, **characterised in that** the respective fixing means is formed from at least one thread turn (26), which is guided around the pin-shaped fixing part (4) and which preferably extends from the back side (8) of the support plate (12) to the free end or a free end region (18) of the fixing part (4).

5. Fastening device according to any one of the above claims, **characterised in that** that
- the respective thread turn (26), viewed in the longitudinal direction of the pin-like fixing part (4), is interrupted forming at least one receiving groove (30, 34);
- preferably one group of a plurality of receiving grooves (30, 34) is provided, which, placed one on top of the other, form a longitudinal channel (28) parallel to the longitudinal direction of the fixing part (4); and
- more preferably, at least two such longitudinal channels (28) are provided which are arranged particularly preferably opposite one another diametrically with respect to the longitudinal axis of the fixing part (4) and exclusively pass through the respective thread turn (26).

6. Fastening device according to claim 5, **characterised in that**, with two opposite longitudinal channels (28), viewed in the circumferential direction, the respective one ends (30) of the thread turns (26) define a side wall of the relevant longitudinal channel (28), said side wall lying on a common radial central transverse axis (32) of the support part (2), and **in that** the respective other ends (34) of the thread turns, which lie on different radial transverse axes (36, 38) offset from the centre (10), define the other side wall of the longitudinal channels (28), which follows a course widening the width of the respective longitudinal channel (28) in an outwards direction.

7. Fastening device according to claim 5 or 6, **characterised in that**, in order to obtain at least one self-locking fixing means, at least the flanks of the respective thread turn (26) are designed elastically such that the fastening device as a whole can be inserted in the assignable component (42, 44) in a locking manner as a plug that can be pressed in.

8. Fastening device according to any one of the preceding claims, **characterised in that** the tool recess (36) permits the actuating tool to be applied by rotation and/or pressure and is preferably designed as a hexagon socket recess.

9. Fastening device according to any one of the preceding claims, **characterised in that** the support part (2) is designed as a polygonal, preferably hexagonal or octagonal support plate (12), on which the closure elements (24), grouped together as a structural unit, can be fixed, in particular glued, on one side.

10. Fastening system consisting of at least one fastening device according to any one of the preceding claims and at least one further fixing device, which comprises closure elements (24), which form a detachable closure with the closure elements (24) from the first fastening device, and which can be connected to a further component (44), which is different from the component (42) with the first fastening device.

## Revendications

1. Dispositif de fixation notamment comme partie d'un système de fixation pour la fixation redétachable de pièces (42, 44) l'une à l'autre, comme des recouvrements de paroi sur des plafonds et des murs, de préférence dans le domaine des espaces intérieurs de quelque type que ce soit, comprenant une partie de support, qui a sur l'une de ses faces une plaque (12) de support d'éléments (24) de fermeture auto-agrippante en sailli et qui a sur son autre face (8) opposée une partie (4) de fixation en saillie, qui a au moins un moyen (26) de fixation, la partie (4) de fixation ayant une longueur axiale qui de préférence est plus petite ou égale à chaque longueur radiale, s'y étendant transversalement, de la partie (2) de support, et dans lequel le moyen (26) respectif de fixation de la partie (4) de fixation est constitué à auto-encliquetage ou auto-taraudage,
**caractérisé en ce que** la plaque (12) de support à un évidement (36) pour l'attaque d'un outil d'actionnement, qui en partant de la plaque (12) de support atteint la partie (4) de fixation et qui est laissée libre des éléments (24) de fermeture auto-agrippante.

2. Dispositif de fixation sur revendication 1, **caractérisé en ce que** la partie (2) de support avec la partie (4) de fixation et le moyen (26) respectif de fixation sont d'une seule pièce en une pièce en matière plastique moulée par injection.

3. Dispositif de fixation suivant la revendication 1 ou 2, caractérisant les éléments (24) de fermeture auto-agrippante sont formés en tout ou partie de boucles, de lacets, de crochets, de champignons ou de tiges ayant des épaississements du côté de l'extrémité ou de la tête.

4. Dispositif de fixation suivant l'une des revendications précédentes, **caractérisé en ce que** le moyen respectif de fixation est formé d'au moins un pas (26) de vis, qui tourne autour de la partie (4) de fixation constituée à la manière d'un tourillon et qui s'étend de préférence à partir de la face (8) arrière de la plaque (12) de support jusqu'à l'extrémité libre ou une partie (18) d'extrémité libre de la partie (4) de fixation.

5. Dispositif de fixation suivant l'une des revendications précédentes, **caractérisé en ce que**
- le pas (26) de vis respectif est, considéré dans la direction longitudinale de la partie (4) de fixation de type en tourillon, interrompu en formant au moins une rainure (30, 34) de réception;
- de préférence, il y a un groupe de plusieurs rainures (30) de réception, qui constituent suivant un agencement en superposition un conduit (28) longitudinal, parallèlement à la direction longitudinale de la partie (4) de fixation et
- il y a, d'une manière encore plus préférée, au moins deux conduits (28) longitudinaux de ce genre, qui sont disposés, d'une manière particulièrement préférée, en étant opposés diamétralement par rapport à l'axe longitudinal de la partie (4) de fixation et qui traversent exclusivement le pas (26) de vis respectif.

6. Dispositif de fixation suivant la revendication 5, **caractérisé en ce que**, lorsqu'il y a deux conduits (28) longitudinaux opposés l'un à l'autre, considérés dans la direction du pourtour, les unes extrémités (30) respectives des pas (26) de vis définissent une paroi latérale, se trouvant sur un axe (32) transversal médian radial commun de la partie (2) de support, du conduit (28) longitudinal concerné et **en ce que** les autres extrémités (34) respectives des pas (26) de vis, qui se trouvent sur des axes (36, 38) transversaux radiaux différents décalés du milieu (10), définissent l'autre paroi latérale des conduits (28) longitudinaux qui possède un tracé élargissant vers l'extérieur la largeur du conduit (28) longitudinal respectif.

7. Dispositif de fixation suivant les revendications 5 ou 6, **caractérisé en ce que**, pour l'obtention d'au moins un moyen de fixation à auto-encliquetage, au moins les flancs du pas (26) de vis respectif sont constitués élastiquement de manière à pouvoir insérer à encliquetage le dispositif de fixation dans son entier, à la manière d'un bouchon pouvant être enfoncé, dans la pièce (42, 44) pouvant être associée.

8. Dispositif de fixation suivant l'une des revendications précédentes, **caractérisé en ce que** l'évidement (36) pour outil rend possible une attaque en rotation et/ou en poussée de l'outil d'actionnement et est constitué, de préférence, sous la forme d'un évidement à six pans intérieurs.

9. Dispositif de fixation suivant l'une des revendications précédentes, **caractérisé en ce que** la partie (2) de support est constituée sous la forme d'une plaque (12) de support polygonale, de préférence hexagonale ou octogonale, sur laquelle sur une face les éléments (24) de fermeture autoagrippant, rassemblés en une unité de construction, peuvent être fixés, en étant notamment collés.

10. Système de fixation constitué d'au moins d'un dispositif de fixation suivant l'une des revendications précédentes et d'au moins un autre dispositif de fixation, qui a des éléments (24) de fermeture auto-agrippante qui forment, avec les éléments (24) de fermeture auto-aggripante du un dispositif de fixation, une fermeture auto-agrippante pouvant être redétachée et qui peuvent être liés à une autre pièce (44) différente de la pièce (42) ayant le un dispositif de fixation.
